# FASCICULE DE BREVET EUROPEEN

(11) **EP 0 786 747 B1**
(45) Date de publication et mention de la délivrance du brevet: **02.01.2002**
(21) Numéro de dépôt: 97400175.2
(22) Date de dépôt: 27.01.1997
(51) Int. Cl.: G07F 7/08

(54) **Carte de paiement virtuelle a puce**
Virtuelle Chipkarte zum Bezahlen
Virtual IC-card for payments

(30) Priorité: 29.01.1996 FR 9600992
(43) Date de publication de la demande: 30.07.1997
(73) Titulaire: FRANCE TELECOM, 75015 Paris (FR)
(72) Inventeur: Abou Hassan, Salman, 14000 Caen (FR); Pailles, Jean-Claude, 14610 Epron (FR); Bouvier, Jacky, 38240 Meylan (FR); Balestro, Freddy, 38700 La Tronche (FR)
(74) Mandataire: Dubois-Chabert, Guy

(56) Documents cités:
- EP-A- 0 147 099
- EP-A- 0 157 416
- EP-A- 0 451 057
- WO-A-94/11849
- WO-A-95/34161
- US-A- 4 700 055
- US-A- 4 725 719
- US-A- 5 359 182

## Description

### Domaine technique

L'invention concerne une carte de paiement par débit de type virtuel, ou "carte virtuelle", munie d'une puce ayant en mémoire un ou plusieurs numéros. On appelle cartes virtuelles, les cartes permettant un paiement dont la valeur est stockée sur un compte géré par un centre serveur.

Cette invention trouve des applications dans les domaines techniques permettant des paiements par cartes virtuelles et, en particulier, dans le domaine des communications téléphoniques.

### Etat de la technique

Dans le domaine des communications téléphoniques, il est connu d'utiliser des cartes de paiement pour payer les communications téléphoniques. Il existe actuellement deux grandes familles de cartes téléphoniques :
- la carte à crédit qui est nominative et nécessite un code secret ; cette carte à crédit n'a pas de valeur intrinsèque, puisqu'elle est jumelée avec un compte bancaire ou un compte téléphonique dont la facturation est faite en différé ;
- la carte à débit qui est anonyme et dont la valeur correspond généralement à la valeur faciale, indiquée sur la face de la carte, ce qui correspond, dans le cas des télécommunications, à un certain nombre d'unités téléphoniques. Cette carte a un prix fixe et peut être utilisée, en une ou plusieurs fois, jusqu'à épuisement de son crédit en unités téléphoniques. Cette carte n'est pas rechargeable et son coût de revient est faible.

Parmi ces cartes à débit, appelées également "télécartes", on distingue :
. les télécartes dont la valeur est stockée sur la carte elle-même, au moyen d'une puce électronique, d'une bande magnétique ou d'une piste optique. La lecture de ces télécartes à valeur stockée se fait au moyen d'un lecteur adapté au type de moyen de mémorisation (puce, bande magnétique...) qui lit la valeur restante avant d'établir la communication, puis en fin de la communication, décrémente le nombre d'unités consommées sur ladite carte.

Dans ce cas, c'est donc le lecteur de carte, commandé par un système de gestion, qui effectue la vérification de la validité de la télécarte ; par exemple, il vérifie l'origine de cette carte ; il vérifie également si la carte n'est pas frauduleuse, etc. De plus, le lecteur de carte s'occupe du crédit restant ; pour cela il vérifie, au préalable, si la carte n'est pas épuisée et, dans ce cas, retire, sur la valeur d'unités restant sur la carte, le nombre d'unités consommées durant la communication.

Une telle télécarte à valeur stockée a l'avantage d'être facile à utiliser pour l'utilisateur puisque celui-ci doit uniquement insérer sa télécarte dans le lecteur, le lecteur effectuant ensuite tous les traitements. En outre, cette télécarte a aussi l'avantage d'être simple à gérer par l'opérateur qui les émet ; cependant, elle nécessite l'utilisation d'un lecteur adapté destiné à lire son contenu et dont l'installation est onéreuse.
. les télécartes, dites virtuelles, dont la valeur est stockée sur un compte géré par un serveur. Pour chaque télécarte, il correspond donc un numéro de compte sur le serveur. Ce compte est provisionné de la valeur indiquée sur la face de la télécarte et il est débité du nombre d'unités consommées à chaque communication. Lorsque le crédit en unités est épuisé, le compte est fermé définitivement.

Contrairement aux cartes à crédit et aux télécartes à valeur stockée, ces télécartes virtuelles ont l'avantage de pouvoir être utilisées à partir de n'importe quel poste téléphonique à fréquence vocale ; elles ne nécessitent donc nullement l'emploi d'un lecteur de cartes spécifique.

Cependant, pour utiliser une telle télécarte, l'utilisateur doit tout d'abord composer un numéro téléphonique qui lui permet d'accéder au serveur qui centralise les comptes des télécartes. Ensuite, l'utilisateur doit composer le numéro d'identification de sa télécarte, qui est généralement noté sur la carte elle-même, puis, si le compte qui correspond à la télécarte n'est pas fermé, c'est-à-dire si le crédit n'est pas épuisé, l'utilisateur accède à une ligne téléphonique et peut alors composer le numéro du correspondant qu'il désire appeler.

Cependant, le numéro d'identification de la carte comporte, en général, au moins dix chiffres décimaux. De même, le numéro d'appel du serveur comporte huit à dix chiffres. De ce fait, l'utilisateur doit composer environ dix-huit à vingt chiffres sur le clavier du téléphone, avant de pouvoir composer le numéro du correspondant qu'il désire appeler. Cette télécarte est donc très peu ergonomique, puisqu'il y a de grands risques de se tromper dans un ou plusieurs chiffres, au moment où l'utilisateur tape les chiffres sur le clavier téléphonique.

En outre, le nombre de télécartes qui peuvent être émises est relativement limité. En effet, le numéro d'identification de la carte est codé sur un certain nombre de bits. De plus, pour assurer une certaine sécurité du système, c'est-à-dire limiter les fraudes, il est nécessaire d'utiliser un système de redondance. Cette redondance utilise également des bits. Le nombre de bits total utilisé généralement pour coder le numéro d'identification de la carte et assurer la redondance est trente-trois. Or, si cette redondance utilise cinq bits, ce qui est le minimum pour assurer une certaine sécurité, cela signifie que le numéro d'identification de la carte ne peut être codé que sur vingt-huit bits (correspondant à dix chiffres décimaux), ce qui représente un nombre de 2²⁸, soit 268 435 456 télécartes qui peuvent être émises. Cependant, la consommation en télécartes par an, pour la France, est de l'ordre de cent-vingt millions. En conséquence, pour permettre d'augmenter le nombre de télécartes pouvant être émises, et éventuellement le nombre de bits servant à la redondance, il est nécessaire d'augmenter le nombre de chiffres du numéro d'identification de carte, ce qui se fait aux dépens de l'ergonomie de la télécarte.

Il existe, par ailleurs, un système de carte téléphonique virtuelle dans lequel chaque abonné peut choisir quelques chiffres de son numéro de carte téléphonique pour former un numéro de carte virtuel. Un numéro de carte standard est associé au numéro virtuel, le numéro standard pouvant être, par exemple, un numéro de compte. Lorsque l'abonné utilise son numéro virtuel pour téléphoner, le système applique le numéro virtuel dans le numéro standard. Ce dernier est alors utilisé par le système pour la validation et le paiement. Un tel système est décrit dans le brevet US-A-5 479 494. Cependant, dans ce système, aucun des numéros enregistrés dans la carte ne comporte de bits de redondance.

### Exposé de l'invention

L'invention a justement pour but de remédier aux inconvénients des télécartes décrites précédemment. A cette fin, elle propose une télécarte virtuelle selon la revendication 1. Les revendications dépendantes concernent d'autres modes de réalisation de l'invention.

### Brève description des figures

- La figure 1 représente schématiquement, selon une vue externe, une télécarte virtuelle à puce, conforme à l'invention ; et
- la figure 2 représente un diagramme fonctionnel des différents modules compris dans la puce de la télécarte virtuelle de l'invention.

### Exposé de modes de réalisation détaillés

L'invention concerne une télécarte virtuelle munie d'une puce dans laquelle est mémorisée une pluralité de chiffres formant un ou plusieurs numéros. La mémorisation du numéro d'identification de la carte sur une puce permet, en effet, de diminuer le nombre de chiffres que l'utilisateur doit taper sur un clavier. De plus, puisque l'utilisateur n'a pas à taper ce numéro sur le clavier, il est donc possible d'augmenter le nombre de chiffres composant le numéro d'identification de la carte.

Le nombre de cartes à fabriquer peut donc augmenter très largement, tout en rendant la carte plus ergonomique. Dans ce cas, le numéro d'identification de carte peut être codé sur un nombre de bits n, bien plus important que pour les cartes de paiement virtuelles connues. Il peut être codé, par exemple, sur soixante-quatre bits, dont un certain nombre k de bits sont des bits de redondance.

Par exemple, le numéro en tant que tel peut être codé sur cinquante-six bits avec, en plus, huit bits de redondance, ce qui permet de réaliser 7,2 x 10¹⁶ télécartes.

Selon un autre exemple, et ceci pour augmenter la sécurité d'utilisation de ces cartes, le numéro d'identification de carte peut être codé sur quarante-huit bits avec, en plus, seize bits de redondance, ce qui permet d'émettre tout de même 2,8 x 10¹⁴ télécartes.

De façon similaire, la puce peut mémoriser des numéros autres que le numéro d'identification de la carte, par exemple un numéro d'identification personnel de l'utilisateur.

Selon l'invention la carte mémorise le numéro d'appel téléphonique du serveur. Toutes les données relatives aux numéros enregistrés sur la puce sont écrits en série, dans la mémoire, en fin du programme de test de la puce, programme tout à fait courant pour l'homme du métier. Ainsi, dans le cas où les numéros d'identification de la carte et de l'utilisateur ainsi que le numéro d'appel du serveur sont mémorisés dans la puce, l'utilisation de la carte est encore plus aisée pour l'utilisateur, puisque celui-ci n'a plus aucun numéro à taper sur le clavier, excepté, bien sûr, le numéro du correspondant qu'il désire appeler.

Une telle carte virtuelle a donc l'avantage que le numéro d'identification de la carte, tout comme le numéro d'identification personnel de l'utilisateur, n'est pas inscrit en clair sur la carte ; ces numéros sont reconnus par le système lors de l'appel au serveur. Ceci permet une production facile des télécartes, puisque toutes les télécartes produites peuvent être similaires, seule change la programmation de la puce.

Les différents modes de réalisation précédents peuvent s'appliquer aussi bien à une carte virtuelle du type à lecture sans contact que du type à lecture par contact, c'est-à-dire par des lecteurs appropriés, tels que ceux des cartes de crédits.

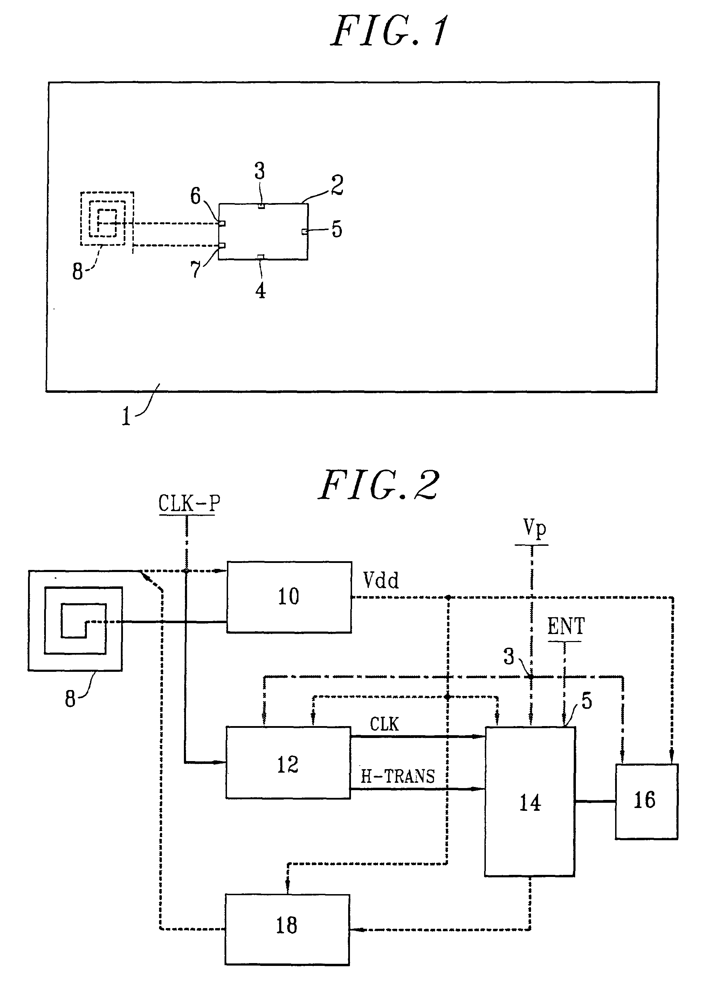

Sur la figure 1, on a représenté, selon une vue de face, une télécarte virtuelle à lecture sans contact comportant un corps de carte 1, ainsi qu'une puce 2. En outre, on a illustré sur cette puce 2 les différentes connexions d'entrée et de sortie permettant de programmer la puce.

De façon plus précise, la borne 3 est une borne par laquelle la puce est alimentée en tension de programmation (Vp). La borne 4 est la borne sur laquelle est connectée la masse (Vss). La borne 5 est la borne d'entrée de programmation, c'est-à-dire que c'est par cette borne de connexion que la puce est programmée. C'est donc par cette borne 5 que sont inscrits, sur la puce, les numéros à mémoriser. La borne 6 et la borne 7 sont les deux bornes de connexion d'une antenne 8 de réception et de transmission de données, ainsi que de téléalimentation (lorsqu'elle est en mode d'utilisation, comme décrit ultérieurement).

Selon le mode de réalisation représenté sur la figure 1, cette antenne 8 est intégrée dans le corps de la carte et connectée sur les bornes de connexion 6 et 7. Cette antenne 8 est donc représentée en pointillés sur la figure 1.

Selon un autre mode de réalisation, l'antenne est intégrée directement sur la puce.

Quel que soit son mode de réalisation, cette antenne assure la téléalimentation de la puce, ainsi que la transmission des données vers le serveur, par l'intermédiaire du réseau téléphonique.

Sur la figure 1, la puce 2 est représentée intégrée sur la télécarte virtuelle. On comprendra, toutefois, que les bornes 3, 4 et 5 de la puce 2 ne sont utilisées qu'au moment de la programmation de la puce, c'est-à-dire avant que la puce 2 ne soit intégrée dans le corps de la carte.

Comme cela est classique pour les cartes à puce, la puce 2 consiste en un composant monolithique noyé dans un corps de carte 1 constituant ainsi une télécarte virtuelle. Le corps de la carte est réalisé en plastique, ou bien en PVC, ou en tout autre matériau usuel pour la fabrication de cartes à puce. Selon un mode de réalisation, la puce est logée dans une cavité creusée dans le corps de carte 1 et rebouchée par une sorte de résine. Selon un autre mode de réalisation, la télécarte est réalisée à partir de trois couches de matériaux superposées les unes aux autres et fixées, par exemple, au moyen d'une colle ; dans ce cas, la puce est logée dans la couche intermédiaire.

Dans le mode de réalisation représenté sur la figure 1 où l'antenne n'est pas intégrée directement sur la puce, l'antenne est alors réalisée au moyen de spires de fils métalliques ou d'une piste de circuits imprimés et noyée dans le corps de carte 1 de la même façon que la puce.

Les cartes virtuelles de type à contact ne nécessitent, par contre, ni antenne, ni moyens de téléalimentation et de récupération d'horloge. Etant plus simples que les cartes virtuelles à lecture sans contact, elles n'ont pas été représentées sur la figure 1 par mesure de simplification de cette figure.

Sur la figure 2, on a représenté un diagramme fonctionnel illustrant les opérations effectuées par la puce d'une télécarte virtuelle à lecture sans contact, soit lors de sa programmation, c'est-à-dire en mode de programmation, soit lors de la transmission de données vers le serveur, c'est-à-dire en mode d'utilisation.

On comprendra donc que la télécarte de l'invention fonctionne selon deux modes :
- le mode de programmation qui est la phase de personnalisation de la télécarte : cette phase consiste à programmer les données concernant la carte elle-même, l'opérateur ou l'utilisateur (à savoir le numéro d'identification de la carte, le numéro d'identification de l'utilisateur, le numéro de l'opérateur ou un numéro d'appel), c'est-à-dire toutes les données fixes qui doivent être stockées sur la puce. La programmation se fait par une écriture dans la mémoire, à la fin du programme de test des puces. Les données sont programmées électriquement une fois pour toutes, puisque la mémoire est de type EPROM.
- Le mode d'utilisation : dans ce mode d'utilisation, le fonctionnement de la télécarte est totalement transparent pour l'utilisateur. En effet, celui-ci décroche le combiné téléphonique et introduit sa carte dans le lecteur lié au combiné ; la télécarte déclenche alors un appel vers le centre du serveur; le serveur renvoie à l'utilisateur un message vocal d'informations relatives au crédit restant sur la télécarte. Si le crédit n'est pas nul, l'utilisateur peut alors composer le numéro de son correspondant ; dans le cas contraire, c'est-à-dire si le crédit est nul, la ligne téléphonique est coupée.

Afin de faciliter l'explication du diagramme de la figure 2, le fonctionnement des blocs sera décrit, d'une part, en mode d'utilisation de la puce et, d'autre part, en mode de programmation de la puce. Les liaisons entre blocs de la puce nécessaires en mode d'utilisation sont représentées en pointillés sur la figure 2. Au contraire, les liaisons entre blocs nécessaires en mode de programmation sont représentées en traits mixtes sur cette figure 2. Et les liaisons nécessaires dans les deux modes de fonctionnement de la puce sont représentées en traits pleins.

En mode d'utilisation de la puce, le bloc 10 représente la téléalimentation de la puce, c'est-à-dire l'alimentation en énergie de la puce à partir d'un signal radiofréquence provenant de l'antenne 8. A titre d'exemple, le signal radiofréquence reçu de l'antenne 8 peut être de 4,9 mégahertz.

De plus, lorsque la télécarte fonctionne en mode d'utilisation, le bloc 10 assure l'alimentation en tension de fonctionnement Vdd des blocs 14 à 18 de la puce (ultérieurement décrits).

En mode de programmation, l'énergie nécessaire pour les traitements est fournie par une source d'alimentation externe, non représentée sur la figure 2 par mesure de simplification. Cette source d'alimentation externe est connectée sur la puce via la borne de connexion 3 de la puce et la borne de connexion de la masse 4 (Vss), qui n'est pas représentée sur la figure 2, par mesure de simplification du schéma. Elle fournit aux blocs 12, 14 et 16 de la puce, une tension de programmation Vp.

D'autre part, le signal radiofréquence provenant de l'antenne 8 est introduit également dans un bloc 12 de récupération d'horloge. En effet, ce bloc 12 récupère le signal radiofréquence provenant de l'antenne 8, puis génère un signal d'horloge CLK assurant la synchronisation du traitement effectué par les autres blocs de la puce et, en particulier, le bloc 14 de gestion de la puce.

Ce bloc 12 génère également une horloge de transmission H-TRANS assurant la synchronisation de l'émission de données par le bloc 14 de gestion de la puce et vers le bloc 18 de modulation.

En mode de programmation, le bloc 14 de gestion de la puce gère la programmation des données sur la mémoire 16 de la puce. En mode d'utilisation, ce bloc 14 assure la lecture des données en mémoire, ainsi que l'émission de ces données. Ce bloc 14 assure également le codage des n bits disponibles en mémoire sous forme d'un signal série au rythme de l'horloge de transmission H-TRANS. C'est sur ce bloc 14 que se situe la borne 5 d'entrée de programmation (ENT).

Le bloc 16 représente la mémoire de la puce. Cette mémoire 16 est une mémoire non volatile programmable de type EPROM qui permet de programmer des données sur n bits. Par exemple, n peut être égal à 96.

En mode de programmation, le bloc 12 de récupération d'horloge fonctionne avec une horloge externe, nommée horloge de programmation CLK-P, qui remplace l'horloge récupérée par l'antenne en mode d'utilisation et génère des signaux d'horloge CLK et H-TRANS qu'il envoie vers le bloc 14 de gestion de la puce. Celui-ci écrit les données reçues sur sa borne 5 dans la mémoire 16. Pendant toute l'opération de programmation de la puce, les blocs 12, 14 et 16 sont alimentés en tension de programmation Vp à partir de la borne 3.

En mode utilisation, les signaux provenant de l'antenne 8 sont reçus, d'une part, par le bloc 12 de récupération d'horloge et, d'autre part, par le bloc 10 de téléalimentation qui génère alors une tension Vdd alimentant les blocs 12, 14 et 16, ainsi que le bloc 18 de modulation pendant chaque période d'utilisation de la carte. En mode utilisation, les signaux d'horloge CLK et H-TRANS sont envoyés vers le bloc 14 de gestion de la puce qui assure la lecture des données en mémoire 16, puis leur émission. Lorsque les données (numéro d'identification de carte,...) stockées en mémoire ont été lues par le bloc 14, elles sont transmises au bloc 18 de modulation qui assure la modulation de ces données sous forme de signaux radiofréquence pouvant être transmis par l'antenne 8 vers le serveur.

Ces télécartes virtuelles de l'invention ont donc l'avantage d'être peu coûteuses du point de vue fabrication, puisque les puces sont programmées avant d'être introduites dans le corps de carte, tout en assurant une ergonomie et une sécurité du système grâce aux bits de redondance.

En outre, les télécartes virtuelles à lecture par contact présentent l'avantage de pouvoir être lues à partir de n'importe quel lecteur de cartes à puce de crédit.

## Revendications

1. Carte téléphonique de type virtuel permettant d'accéder à un compte géré par un serveur interrogeable à partir d'un réseau téléphonique, comportant une puce (2) à lecture par contact ou sans contact, apte à mémoriser une pluralité de chiffres formant au moins le numéro d'identification de la carte et à transmettre ce numéro au serveur par l'intermédiaire du réseau téléphonique, **caractérisée en ce que** la puce est apte aussi à mémoriser le numéro d'appel téléphonique du serveur, le numéro d'identification de la carte, au moins, étant codé sur un nombre de n bits dont k bits sont des bits de redondance, k étant strictement inférieur à n.

2. Carte de paiement de type virtuel selon la revendication 1, **caractérisée en ce que** la puce est apte à mémoriser aussi un numéro d'identification personnel de l'utilisateur.

3. Carte de paiement de type virtuel selon l'une quelconque des revendications 1 et 2 comprenant un corps de carte (1) dans lequel est noyée la puce (2), **caractérisée en ce que** la carte est à lecture sans contact et qu'elle comporte une antenne (8), également noyée dans le corps de la carte (1), et assurant une télé-alimentation de la puce.

4. Carte de paiement de type virtuel selon l'une quelconque des revendications 1 et 2, comprenant un corps de carte (1) dans lequel est noyée la puce (2), **caractérisée en ce que** la carte est à lecture sans contact et qu'elle comporte une antenne intégrée sur la puce et assurant une télé-alimentation de la puce.

## Patentansprüche

1. Telefonkarte virtueller Art, die den Zugang zu einem durch einen Server verwalteten Konto gestattet, das von einem Telefonnetz aus abfragbar ist, umfassend einen durch Kontakt oder kontaktlos ablesbaren Chip (2), der mehrere Ziffern speichern kann, welche mindestens die Identifizierungsnummer der Karte bilden, und der diese Nummer dem Server über das Telefonnetz übermitteln kann,
**dadurch gekennzeichnet, daß**
der Chip auch die telefonische Rufnummer des Servers speichern kann, wobei zumindest die Identifizierungsnummer der Karte auf einer Anzahl von n-Bits codiert ist, von denen k-Bits redundante Bits sind, wobei k grundsätzlich kleiner als n ist.

2. Zahlkarte virtueller Art gemäß Anspruch 1, **dadurch gekennzeichnet, dass**
der Chip auch eine persönliche Identifizierungsnummer des Benutzers speichern kann.

3. Zahlkarte virtueller Art gemäß einem der Ansprüche 1 und 2 mit einem Kartenkörper (1), in dem der Chip (2) eingebettet ist, **dadurch gekennzeichnet, dass**
die Karte eine kontaktlos lesbare Karte ist, dass sie eine Antenne (8) umfasst, die ebenfalls im Kartenkörper (1) eingebettet ist und eine Fernspeisung bzw. Fernversorgung des Chips gewährleistet.

4. Zahlkarte virtueller Art gemäß einem der Ansprüche 1 und 2, mit einem Kartenkörper (1), in den der Chip (2) eingebettet ist, **dadurch gekennzeichnet, dass**
die Karte eine kontaktlos lesbare Karte ist, und dass sie eine in den Chip integrierte Antenne aufweist, die eine Fernspeisung bzw. Fernversorgung des Chips gewährleistet.

## Claims

1. Phonecard of the virtual type allowing access to an account managed by a server which can be polled from a telephone network, comprising a chip (2) with contact or no-contact reading, capable of storing a plurality of digits forming at least one number and of transmitting this number to the server via the telephone network, **characterized in that** the chip is also able to store the phone call number of the server, the identification number of the card, at least, being coded on a number of n bits, whereof k bits are redundancy bits, k being strictly less than n.

2. Payment card of the virtual type according to claim 1, **characterized in that** the chip is also able to store a personal identification number of the user.

3. Payment card of the virtual type according to either of the claims 1 and 2, comprising a card body (1) in which is embedded the chip (2), **characterized in that** said card incorporates an antenna (8), which is also embedded in the card body (1) and which ensures the remote power supply to the chip.

4. Payment card of the virtual type according to either of the claims 1 and 2, comprising a card body (1) in which is embedded the chip (2), **characterized in that** said card incorporates an antenna integrated on the chip and ensuring a remote power supply to the chip.
